# FASCICULE DE BREVET EUROPEEN

(11) **EP 0 633 093 B1**
(45) Date de publication et mention de la délivrance du brevet: **23.09.1998**
(21) Numéro de dépôt: 94401542.9
(22) Date de dépôt: 05.07.1994
(51) Int. Cl.: B23K 35/30, C04B 37/02

(54) **Procédé d'assemblage de tungstène avec des céramiques contenant du silicium, par brasage**
Verfahren zum Verbinden von Wolfram mit Silizium enthaltende keramische Werkstoffen durch Hartlöten
Process for assembling tungsten with silicon containing ceramics by brazing

(30) Priorité: 07.07.1993 FR 9308342
(43) Date de publication de la demande: 11.01.1995
(73) Titulaire: COMMISSARIAT A L'ENERGIE ATOMIQUE, 75015 Paris (FR)
(72) Inventeur: Chaumat, Gilles, F-38170 Seyssinet (FR); Coing-Boyat, Gisèle, F-38360 Sassenage (FR); Drevet, Béatrice, F-38100 Grenoble (FR); Eustathopoulos, Nicolas, F-38100 Grenoble (FR)
(74) Mandataire: Dubois-Chabert, Guy

(56) Documents cités:
- EP-A- 0 100 835
- GB-A- 487 263
- GB-A- 1 310 997
- GB-A- 2 092 050
- US-A- 3 813 759
- US-A- 4 228 344

## Description

La présente invention se rapporte à un procédé d'assemblage de tungstène ou de ses alliages par brasage avec des céramiques contenant du silicium, en vue de réaliser des assemblages réfractaires pouvant supporter de hautes températures. Par céramique, on entend tout matériau réfractaire.

Ces céramiques sont par exemple du carbure de silicium (SiC), du nitrure de silicium (Si₃N₄) ou sur un siliciure d'un métal réfractaire tel que le siliciure de tungstène (WSi₂), de molybdène (MoSi₂), de titane (TiSi₂) ainsi que des carbosiliciures de ces métaux réfractaires tels que Ti₃SiC₂.

Le domaine technique de l'invention est le brasage à haute température, c'est-à-dire qu'il met en oeuvre des températures supérieures à 1200°C, ce qui permet l'utilisation de l'assemblage obtenu dans des applications nécessitant des montées en températures pouvant dépasser 900°C.

Comme pour toutes les céramiques, il est généralement difficile de fabriquer des pièces de forme complexe avec des composés à base de silicium. Il est donc préférable de fabriquer des structures à partir d'éléments en céramiques de forme simple et d'assembler ces éléments en effectuant des liaisons céramique/céramique et/ou céramique/métal.

Les matériaux du type Si₃N₄ ou SiC sont des céramiques fabriquées industriellement qui présentent des propriétés intéressantes et notamment une très bonne dureté, une résistance mécanique élevée, une stabilité à l'air jusqu'à des températures de 1200°C environ, une bonne propriété de frottement, une faible densité et une bonne résistance à la corrosion et à l'oxydation.

Les principaux secteurs où ces céramiques peuvent être utilisées sont :

Pour le Si₃N₄ :
- l'automobile pour la réalisation de rotors pour turbo ou turbine, de poussoir de culbuteur, de soupape ;
- le génie énergétique pour la fabrication de stator ou buse d'injection dans des groupes de turboalternateur ;
- l'aéronautique ;
- les applications mécaniques pour la réalisation d'outils de coupe, de roulements à bille ;
- le génie chimique pour la réalisation de pompes, de réacteurs, de filtres ;
- la fabrication de pièces thermomécaniques diverses.

Pour le SiC :
- le génie chimique pour la fabrication de réacteurs, de garnitures de pompe ;
- le génie thermique pour la réalisation d'échangeurs de chaleur ;
- la mécanique pour l'obtention de pièces de frottement, de pièces rigides.

Le tungstène est très intéressant pour réaliser des joints céramique/métal car il est compatible du point de vue de la thermomécanique avec les céramiques telles que le nitrure de silicium et le carbure de silicium : coefficient de dilatation du tungstène = 4-5.10-⁶/K, du nitrure de silicium fritté nature = 4-5.10-⁶/K, du carbure de silicium = 4-5.10⁻⁶/K.

Ainsi, les assemblages réfractaires obtenus selon l'invention peuvent être utilisés pour toutes ces applications.

Actuellement, l'assemblage réfractaire de céramiques entre elles ou avec des composés métalliques réfractaires utilise le soudage par diffusion en phase solide et le brasage réactif qui met en oeuvre des matériaux de brasure réagissant chimiquement avec les céramiques et composés métalliques à assembler. En effet, les techniques classiques d'assemblage faisant intervenir un faisceau d'énergie (soudage TIG, électron ou laser) sont inutilisables pour l'assemblage de céramiques du fait qu'on ne peut pas faire fondre un substrat ou une pièce en céramique.

Par rapport au brasage réactif, le soudage par diffusion en phase solide présente le désavantage d'être très limité quant aux formes des pièces à assembler lorsqu'on utilise le pressage uniaxial ou de nécessiter de nombreuses préparations lorsqu'on utilise la compression isostatique à chaud telles que la fabrication d'enveloppe, la fermeture étanche sous vide, la compression isostatique à chaud, l'usinage final de l'enveloppe. De plus, cette technique par diffusion nécessite des durées longues (une à plusieurs heures) qui pourraient favoriser le grossissement des grains des alliages réfractaires et les fragiliser.

Il est connu de braser les céramiques contenant du silicium avec des siliciures métalliques du type Ti-Si (voir US-A-4 961 529), Ni-Si (voir US-A-3 813 759), Fe-Si (voir US-A-3 813 759), Ge-Si ou Cr-Si (voir GB-A-1 310 997 ou GB-A-1 315 319), Co-Si (voir US-A-4 499 360) ou Mo-Si (voir US-A-4 657 825). En effet, ces siliciures métalliques ont des propriétés intéressantes comme leur résistance à la corrosion et surtout leur parfaite compatibilité "physico-chimique" avec les céramiques contenant du silicium : on observe notamment une zone de réaction contrôlée entre le matériau de brasure et la céramique, sans porosité ni fissure.

Cependant, l'utilisation de telles brasures (siliciures métalliques) a été rarement proposée sur les alliages métalliques.

En effet, les siliciures métalliques sont généralement trop réactifs vis-à-vis des métaux et alliages métalliques pour lesquels il existe des composés définis avec le silicium.

Le document GB 487263 de General Electric Company divulgue l'utilisation de siliciures métalliques des métaux de transition tels que le fer, le nickel et le cobalt pour réaliser des assemblages brasés bimétalliques molybdène/molybdène. Toutefois, les brasures proposées, notamment celles à base de cobalt et silicium ne sont applicables à l'assemblage de tungstène et de SiC. En effet, ces brasures et notamment celles riches en cobalt réagissent avec le carbure de silicium en formant des siliciures de cobalt.

Les brasures métalliques qui sont classiquement utilisées pour le brasage du tungstène ne sont pas adaptées au brasage de céramiques contenant du silicium telles que le carbure de silicium ou le nitrure de silicium. En effet, ces brasures métalliques ne sont pas directement utilisables du fait de leur trop grande réactivité et en particulier de la formation de nombreux composés définis (siliciure ou nitrure), de porosités importantes, de fissures dans la zone de réaction qui se prolongent dans la céramique.

Ces problèmes de compatibilité sont décrits vis-à-vis de SiC dans le document S.K. Choi et al., Joining, Ceramics, Glass and Metal, édité par W.Kraft, 1989, p. 297-304, "Interfacial reaction between SiC and transition metals, Ti, Cr, Fe, Ni" et le document M.R. Jackson et al., Metallurgical Transactions A, vol.14A, mars 1983, "Solid state SiC/Ni alloy reaction", p. 355-364.

Les seules brasures métalliques actuellement compatibles avec les céramiques à base de silicium, sont à base de cuivre et/ou de métaux précieux. Ces brasures utilisent, comme élément actif, le titane.

Les brasures à base de cuivre (TiCuNi par exemple contenant du cuivre, du nickel et du titane) ont une très faible tenue à la corrosion à haute température alors que les brasures contenant des métaux précieux (TiCuSil par exemple contenant de l'argent, du cuivre, du titane ainsi que des traces de silicium et d'or ; CuSil ABA contenant de l'argent, du cuivre et du titane) sont chers du fait du prix élevé de la matière première. En outre, le brasage nécessite un très bon vide du fait de l'affinité du titane avec l'oxygène.

Il est par ailleurs connu du document US-A-5 031 822 l'assemblage d'éléments en molybdène et/ou tungstène à un élément en silicium pur par brasage à basse température, c'est-à-dire inférieure à 700°C, avec des brasures à base d'aluminium et en utilisant des dépôts métalliques sur le molybdène et/ou le tungstène à assembler, à base d'or et de palladium, de platine et de rhodium.

Ce processus a encore l'inconvénient d'utiliser au moins un métal précieux. En outre, son brasage à basse température ne permet pas l'utilisation des assemblages obtenus pour des applications nécessitant des températures supérieures à 700°C. De plus, l'utilisation de dépôts successifs de métaux complique quelque peu l'assemblage.

Ainsi, l'invention a pour objet un procédé d'assemblage de tungstène ou de ses alliages avec des céramiques contenant du silicium, permettant de remédier notamment aux inconvénients mentionnés ci-dessus.

Le procédé de l'invention présente en particulier l'avantage de conduire à des assemblages réfractaires pouvant résister à des hautes températures pouvant aller jusqu'à 1100°C dans certains cas.

En outre, il présente l'avantage d'être bien adapté à la fois aux alliages réfractaires du type W, et aux céramiques contenant du silicium du point de vue de la réactivité (réactivité contrôlée), de la mouillabilité, et de l'adhérence.

Ainsi, l'invention a pour objet un procédé d'assemblage d'un composé métallique choisi parmi le tungstène et ses alliages avec les céramiques contenant du silicium, caractérisé en ce qu'il consiste à mettre au contact du composé métallique et du matériau une brasure intermétallique du type Co-Si et à chauffer l'ensemble composé-brasure-matériau à une température de brasage supérieure à la température de fusion de la brasure et inférieure à la température de formation des eutectiques composé métallique-silicium.

En plus des avantages indiqués précédemment, la brasure intermétallique Co-Si de l'invention a l'avantage d'être peu sensible à la corrosion (oléum, HNO₃, ...) et en particulier à l'oxydation. En outre, contrairement aux brasures réactives conventionnelles, la qualité de l'atmosphère du four de brasage est moins critique.

Comme autre avantage du procédé de l'invention, on peut encore citer : des durées de brasage courtes (5 à 10 min seulement) évitant le grossissement de grains d'alliages métalliques réfractaires, ce qui n'est pas le cas dans la diffusion en phase solide qui nécessite des durées plus longues ; une mise en oeuvre simple ne nécessitant pas des dépôts métalliques supplémentaires est moins coûteuse que celle de l'art antérieur.

De façon surprenante, on a constaté que les brasures réfractaires du type Co-Si n'attaquaient pas le tungstène ou ses alliages lorsque la température de brasure restait inférieure aux températures des eutectiques composé métallique-silicium correspondants : 1414°C pour WSi₂-Si pur.

Afin de limiter la réactivité de l'interface brasure intermétallique/W ou alliage, lors du brasage, il est préférable de sélectionner une composition de la brasure à partir du diagramme de phase Co-Si afin que la température de brasage soit la plus basse possible. En outre, pour limiter la réactivité à l'interface brasure intermétallique/céramique lorsque l'on assemble du tungstène ou ses alliages avec une céramique contenant du silicium, il est avantageux d'utiliser des brasures intermétalliques "riches en silicium" vis-à-vis de la céramique.

Pour ces deux raisons, la composition de la brasure intermétallique est choisie avantageusement entre 39% et 98% en poids de silicium pour avoir une température de brasage inférieure à celle du point eutectique du système W-Si selon les cas envisagés et de préférence entre 45% et 70% en poids de silicium.

D'autres caractéristiques et avantages de l'invention ressortiront mieux de la description qui va suivre, donnés à titre illustratif et non limitatif, en référence aux figures annexées, dans lesquelles :
- la figure 1 représente une partie du diagramme de phase Co-Si illustrant les différentes compositions en % d'atome et en % en poids de Si de la brasure intermétallique Co-Si et les températures T en °C correspondantes ;
- la figure 2 donne le diagramme de phase partiel de W-Si pour des % d'atome et % en poids de Si et des températures T en °C.

Le procédé de l'invention consiste tout d'abord à préparer une suspension d'une poudre de Co-Si dans un liant organique liquide puis à enduire les surfaces des pièces à assembler avec cette suspension après les avoir dégraissées puis séchées. Le liant organique liquide est du type cétone, ester, alcool, etc.

L'assemblage peut être réalisé entre une première pièce métallique en tungstène ou en un de ses alliages avec une pièce en SiC, Si₃N₄ ou toute autre céramique du type siliciure.

Les pièces alors prêtes à être brasées sont disposées dans un four, sous vide ou sous gaz neutre. Un premier palier de températures permet un dégazage de l'ensemble et une évaporation du liant et un second palier de températures permet le brasage proprement dit. Ce dernier est effectué à une température supérieure à la température de fusion de la brasure et inférieure à la température de formation de l'eutectique du type W-Si. La durée de brasage est comprise entre 4 et 12 min et la pression du four est comprise entre 10⁻⁴ et 10⁻² Pa.

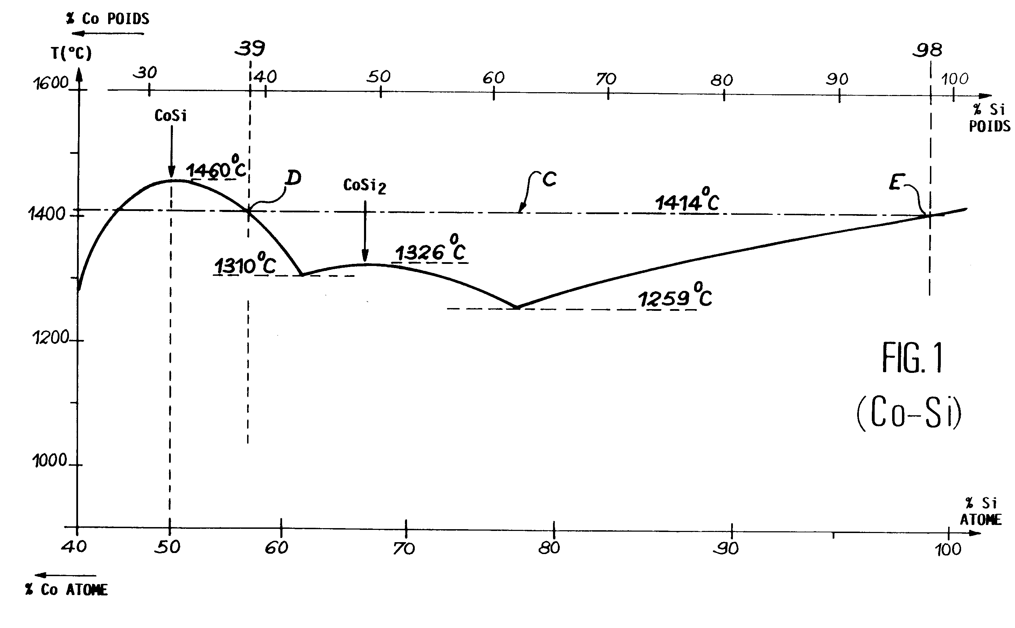

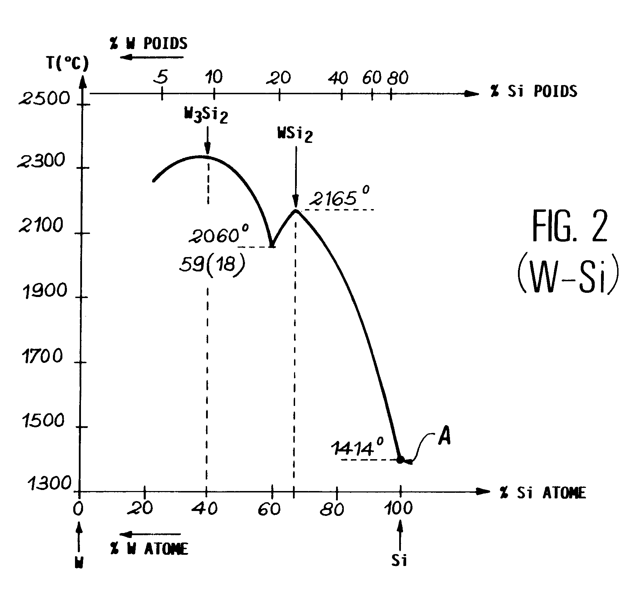

Conformément à l'invention, les compositions de la brasure Co-Si apparaissant sur la figure 1 ont une température de fusion inférieure à celle de l'eutectique WSi₂/Si pur à 1414°C comme cela apparaît clairement sur la figure 2 donnant le diagramme de phase du silicium et du tungstène.

Les compositions de la brasure sont déterminées comme ci-après.

Sur le diagramme de phases de W-Si de la figure 2, on note tout d'abord la température du point eutectique qui est de 1414°C (point A). La température de brasage doit impérativement être choisie inférieure à ces températures.

Sur le diagramme de phase du système Co-Si (représenté sur la figure 1), on trace alors une droite C parallèle à l'axe des compositions, passant par le point des ordonnées à T=1414°C.

Les intersections D et E de cette droite C avec la courbe du diagramme de phase Co-Si donnent les limites de la composition de la brasure Co-Si conforme à l'invention. Les points C et D (figure 1) qui donnent, en abscisses les limites du domaine, correspondent respectivement à 39% en poids de Si et 98% en poids de Si.

### EXEMPLE 1

Cet exemple concerne la liaison mécanique d'une pièce en SiC et d'une autre pièce en tungstène en utilisant une brasure à base de cobalt. Les pièces à assembler avaient la forme de parallélépipèdes rectangles et les dimensions suivantes : 18x16x6 mm pour SiC et 10x10x1 mm pour W.
**a**) - Fabrication de la brasure :
   On synthétise tout d'abord une composition intermétallique contenant 62% en poids de Si et 38% en poids de Co à partir de fils de cobalt et de morceaux de silicium. Le cobalt et le silicium sont introduits dans un creuset en alumine puis chauffés sous vide à 1290°C pendant 5 min pour faire fondre les différents constituants et synthétiser le composé Co-Si comportant 62% en poids de Si. On obtient un morceau de brasure intermétallique que l'on broie dans un mortier pour obtenir une poudre dont les grains ont un diamètre allant de 0,05 à 0,1mm.
   Cette poudre est ensuite mise en suspension dans un cément organique visqueux qui se décompose entre 100°C et 300°C sans laisser de trace, de chez Nicrobraz®.
**b**) - Brasage :
   Les pièces en SiC et W sont dégraissées à l'aide d'un mélange aliquote d'éthanol, d'acétone et d'éther, puis séchées et enfin enduites de la suspension de brasure. Elles sont disposées dans un four mis sous vide.
   On effectue un premier palier à 200°C pendant 1 heure pour le dégazage et l'élimination du solvant puis un second palier à 1290°C pendant 5 min. La pression du vide secondaire est de 10⁻³ Pa.
**c**) - test mécanique de la liaison.
   Un test mécanique en cisaillement a été réalisé sur l'ensemble obtenu. La rupture de la liaison a été obtenue à 105 MPa.

### EXEMPLE 2

Cet exemple concerne la liaison mécanique d'une pièce en W pur et d'une autre pièce en nitrure de silicium en utilisant une brasure à base de cobalt. Les pièces à assembler avaient la forme de parallélépipèdes et les dimensions suivantes : Si₃N₄ : 20x20x1 mm et W : 10x10x1 mm.
a) - Fabrication de la brasure :
   On synthétise tout d'abord une composition intermétallique contenant 62% en poids de silicium et 38% en poids de cobalt à partir de fils de cobalt et de morceaux de silicium. La procédure est la même que celle décrite dans l'exemple 1.
b) - Brasage :
   La procédure est la même que celle appliquée dans l'exemple 1;
c) - Test mécanique de la liaison :
   Un test mécanique en cisaillement a été réalisé sur l'ensemble obtenu. La rupture de la liaison mécanique obtenue est 100 MPa.

La description donnée précédemment n'a bien entendu été donnée qu'à titre illustratif, des modifications pouvant être envisagées. Ainsi, au lieu d'utiliser la brasure sous forme d'une poudre de Co-Si suspendue dans un liant organique qui se volatilise lors du traitement thermique, on peut utiliser d'autres techniques de dépôt sur les pièces à assembler, telles que le dépôt physique (PVD), la décomposition thermique après métallisation, la réduction chimique, l'électrolyse, l'évaporation sous vide. En outre, au lieu d'effectuer le brasage sous vide, on peut envisager de braser sous des gaz neutres tels que l'azote, l'argon, voire même sous une pression partielle d'oxygène.

## Revendications

1. Procédé d'assemblage d'un composé métallique choisi parmi le tungstène et ses alliages avec une céramique contenant un composé à base de silicium, caractérisé en ce qu'il consiste à mettre au contact du composé métallique et du matériau, une brasure intermétallique du type Co-Si et à chauffer l'ensemble composé-brasure-matériau à une température de brasage supérieure à la température de fusion de la brasure et inférieure à la température de formation des eutectiques composé métallique-silicium.

2. Procédé selon la revendication 1, caractérisé en ce que la céramique est choisie parmi SiC et Si₃N₄.

3. Procédé selon la revendication 1 ou 2, caractérisé en ce que la brasure a une composition allant de 39% à 98% en poids de silicium.

4. Procédé selon la revendication 3, caractérisé en ce que la composition de la brasure est choisie de 45% à 70% en poids de silicium.

5. Procédé selon la revendication 1, caractérisé en ce que la brasure intermétallique contient 62% en poids de silicium et 38% en poids de cobalt et en ce que le brasage est effectué à 1290°C.

6. Procédé selon l'une quelconque des revendications 1 à 5, caractérisé en ce qu'on forme une poudre de Co-Si, met en suspension cette poudre dans un liant organique et enduit les parties du composé métallique et du matériau à assembler avec la suspension obtenue.

## Claims

1. Method of joining a metallic compound chosen from tungsten and its alloys to a ceramic containing a silicon-based compound, characterized in that it consists in bringing into contact with the metallic compound and with the material an intermetallic braze of the Co-Si type and in heating the compound/braze/material assembly to a brazing temperature above the melting temperature of the braze and below the temperature at which the metallic-compound/silicon eutectics form.

2. Method according to Claim 1, characterized in that the ceramic is chosen from SiC and Si₃N₄.

3. Method according to Claim 1 or 2, characterized in that the braze has a composition ranging from 39% to 98% by weight of silicon.

4. Method according to Claim 3, characterized in that the composition of the braze is chosen as 45% to 70% by weight of silicon.

5. Method according to Claim 1, characterized in that the intermetallic braze contains 62% by weight of silicon and 38% by weight of cobalt and in that the brazing is carried out at 1290°C.

6. Method according to any one of Claims 1 to 5, characterized in that a Co-Si powder is formed, this powder is suspended in an organic binder and the parts of the metallic compound and of the material to be joined together are coated with the suspension obtained.

## Patentansprüche

1. Verfahren zur Zusammenfügung einer metallischen Verbindung, gewählt unter Wolfram und seinen Legierungen, mit einer Keramik, eine Verbindung auf Siliciumbasis enthaltend, dadurch gekennzeichnet, daß es darin besteht, mit der metallischen Verbindung und mit dem Material ein intermetallisches Hartlot vom Typ Co-Si in Kontakt zu bringen und die Anordnung aus Verbindung, Hartlot und Material auf eine Löttemperatur zu erwärmen, die über der Schmelztemperatur des Hartlots und unter der Bildungstemperatur der Eutektika von metallischer Verbindung und Silicium liegt.

2. Verfahren nach Anspruch 1, dadurch gekennzeichnet, daß die Keramik unter SiC und Si₃N₄ gewählt wird.

3. Verfahren nach Anspruch 1 oder 2, dadurch gekennzeichnet, daß das Hartlot eine Zusammensetzung hat, die von 39 bis 98 Gew.-% Silicium geht.

4. Verfahren nach Anspruch 3, dadurch gekennzeichnet, daß die Zusammensetzung des Hartlots zu 45 bis 70 Gew.-% Silicium gewählt wird.

5. Verfahren nach Anspruch 1, dadurch gekennzeichnet, daß das intermetallische Hartlot 62 Gew.-% Silicium und 38 Gew.-% Cobalt enthält und daß die Hartlötung bei 1290°C ausgeführt wird.

6. Verfahren nach einem der Ansprüche 1 bis 5, dadurch gekennzeichnet, daß man ein Co-Si-Pulver bildet, dieses Pulver in einem organischen Bindemittel in Suspension bringt und die Partien der metallischen Verbindung und des Materials, die zusammengefügt werden sollen, mit der erhaltenen Suspension bestreicht.
